# EUROPEAN PATENT APPLICATION

(11) **EP 2 413 169 A1**
(43) Date of publication of application: **01.02.2012**
(21) Application number: 10251366.0
(22) Date of filing: 30.07.2010
(51) Int. Cl.: G02B 6/00, G02F 1/13357, G07F 17/32

(54) **Backlight unit having dual display function**

(71) Applicant: Hansol Technics Inc., Gangnam-gu Seoul 135-924 (KR)
(72) Inventor: Lim, Jae-Keun, Chungcheongbuk-do (KR); Ki, Jung-Tae, Chungcheongbuk-do (KR); Nam, Mu-Il, Gyeongsangbuk-do (KR); Kim, Jung-Soo, Chungcheongbuk-do (KR); Kim, Jong-Ju, Chungcheongbuk-do (KR)
(74) Representative: Mounteney, Simon James

(57) **Abstract**

Provided is a backlight unit (100) having a dual-display function. The backlight unit includes at least one first light source (40) configured to irradiate light, a first light guide member (30) provided with a first through-hole (31) corresponding to a partial region (11) to guide the light irradiated from the first light source to the remaining region (12) other than the partial region of the liquid crystal panel (10), an instrumental panel (90) disposed at a rear of the first light guide member at a position corresponding to the first through-hole, and displayed on the partial region through the first through-hole, at least one second light source (60) interposed between the first light guide member and the instrumental panel to irradiate light, and a second light guide member (50) having at least one pattern configured to diffuse the light irradiated from the second light source to guide the light to the instrumental panel and the liquid crystal panel.

## Description

### BACKGROUND

### 1. Field

Embodiments of the inventive concept relate to a backlight unit having a dual-display function, and more particularly, to a backlight unit having a dual-display function which can divide a whole region of a liquid crystal panel into a partial region displaying an image and an instrumental panel, and a remaining region displaying only an image so as to improve discrimination and reduce fatigue of eyes by accurately separating displayed contents in a case in which different contents are displayed on the partial region and the remaining region, and by reducing separation and overlap in a case in which the same content is displayed.

### 2. Description of Related Art

Generally, a display device is a device capable of displaying figures, characters and images of contents to be displayed, and includes a cathode ray tube (CRT), a liquid crystal display (LCD), and a plasma display panel (PDP).

The liquid crystal display can display figures, characters and images implemented on a liquid crystal by irradiating light onto the liquid crystal. However, since it cannot emit light by itself, the liquid crystal display displays an image by irradiating light onto a liquid crystal panel of the liquid crystal display using a separate light source. Accordingly, the liquid crystal display is provided with a backlight unit so as to irradiate the light onto the liquid crystal panel.

The backlight unit is classified into an edge type and a direct type depending upon an installation position of a lamp. The edge type is a type employing a lamp or upon an installation position of a lamp. The edge type is a type employing a lamp or lamps disposed at one side or both sides on the basis of a light guide plate which guides the light, and the direct type is a type employing a plurality of lamps arranged directly under the light guide plate to irradiate the light onto the liquid display panel.

In addition, the backlight unit includes a liquid crystal panel installed in the front of a bottom chassis, a plurality of lamps disposed between the liquid crystal panel and the bottom chassis, and a plurality of sockets which fix the light guide plate to the bottom chassis and connect a power inverter and the lamps.

For this reason, in a case in which the image is realized by the light emitted from the lamps, the image is expressed only by an image realized by the liquid crystal panel. Therefore, there is a problem in that game contents of a slot machine, which can only be specifically expressed instrumentally on the liquid crystal panel, cannot be displayed at the same time.

As disclosed in Japanese Unexamined Patent Application No. 2004-166964, there is provided a liquid crystal display which is divided into different regions to realize the instrumental image as the need arises. Also, the liquid crystal display can not only realize the image on the whole region of the liquid crystal panel, but can also show an instrumental panel, which is provided at a rear side, from a partial region of the liquid crystal panel to recognize the instrumental panel according to game circumstances.

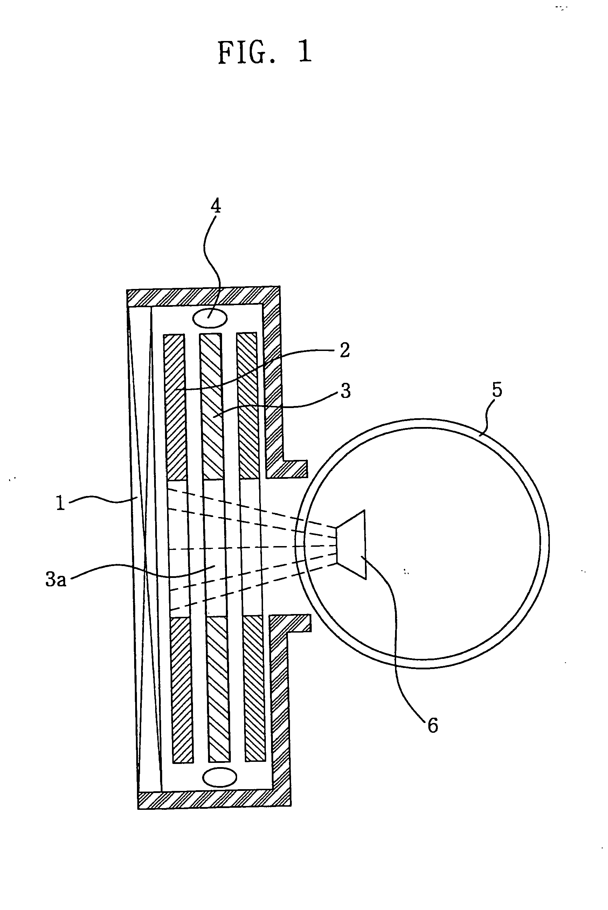

That is, as shown in FIG. 1, a liquid crystal panel 1 is provided at the front of the liquid crystal display, and an optical film 2 and a light guide member 3 are sequentially provided at the rear of the liquid crystal panel 1. Lamps 4 are respectively provided at one side of edges of the light guide member 3, so that the light emitted from the lamps 4 is guided towards the liquid crystal panel 3 by the light guide member 3 and the image is realized on the liquid crystal panel 1 by the guided light. In addition, the liquid crystal display includes a hole 3a formed in a portion of the light guide member 3 to simultaneously display the contents of an instrumental panel 5, which is instrumentally displayed at the rear, if necessary, through the hole 3a.

However, there is a problem in that, since the instrumental panel and the hole 3a of the light guide member are provided, in a case in which the same image is realized on the whole liquid crystal panel 1, division of light and shade is not clear at the portion in which the hole is formed and a portion in which the hole is not formed, thereby separating the images.

In addition, in a case in which an image is realized on a portion of the liquid crystal panel, that is, an edge region of the liquid crystal panel in which the hole is not formed, and an image is not realized on a center region in which the hole is formed, the instrumental panel 5 is irradiated by the lamps 6 provided at the rear of the instrumental panel 5. Therefore, there are drawbacks in that the image is overlapped with the displayed contents of the instrumental panel, so that discrimination is deteriorated and fatigue of eyes is increased.

### SUMMARY

Embodiments of the inventive concept provide a backlight unit having a dual-display function which can divide a whole region of a liquid crystal panel into a partial region displaying an image and an instrumental panel, and a remaining region displaying only an image so as to improve discrimination and reduce fatigue of eyes by accurately separating displayed contents in a case in which different contents are displayed on the partial region and the remaining region, and by reducing separation and overlap in a case in which the same contents are displayed.

In accordance with an aspect of the inventive concept, a backlight unit having a dual-display function includes: at least one first light source configured to irradiate light; a first light guide member provided with a first through-hole corresponding to a partial region to guide the light irradiated from the first light source to the remaining region other than the partial region of the liquid crystal panel; an instrumental panel disposed at a rear of the first light guide member at a position corresponding to the first through-hole, and displayed on the partial region through the first through-hole; at least one second light source interposed between the first light guide member and the instrumental panel to irradiate light; and a second light guide member having at least one pattern configured to diffuse the light irradiated from the second light source to guide the light to the instrumental panel and the liquid crystal panel.

The pattern may be formed at a region corresponding to the first through-hole, and may protrude from a surface facing the instrumental panel at a predetermined height towards the instrumental panel or may be recessed on a surface facing the instrumental panel at a predetermined depth towards the instrumental panel.

The pattern may be provided in a dome shape at regular intervals on a surface of the second light guide member, and a cross section of the pattern may have at least one slope. Alternatively, the pattern may be provided in a polygonal shape at regular intervals on a surface of the second light guide member, and a cross section of the pattern may have at least one slope.

The pattern may be provided at a predetermined length along a surface of the second light guide member.

A light shield layer may be formed on an inner surface of the first through-hole to prevent the light irradiated from the first light source from being induced to the first through-hole of the first light guide member. The light shield layer may be a reflection layer for reflecting light facing the partial region, or may be a diffusion layer for dispersing and reflecting light.

The an inner surface of the first though-hole may be provided with a diffused reflection layer for preventing the light emitted from the first light source and the second light source from being mixed with each other.

The first light source may be formed along an edge of the first light guide member, in which at least two first light sources are disposed on both sides thereof in a symmetrical manner. The instrumental panel may be provided as a rotatable reel, and a third light source may be provided at a rotational center of the reel to irradiate the light onto the instrumental panel.

A reflection plate may be provided between the first light guide member and the second light guide member, and may be provided with a second through-hole corresponding to the partial region to reflect the light, which is guided in a backward direction from the first light guide member, to the remaining region.

An optical sheet may be interposed between the first light guide member and the liquid crystal panel to uniformly diffuse the light, which is induced by the first light guide member, to the liquid crystal panel.

The backlight unit may include a housing for housing the liquid crystal panel, the first light guide member, the first light source, the second light guide member, and the second light source, and the housing may be provided with a receiving hole corresponding to the first through-hole of the first light guide member.

The first through-hole may be provided with a transmission member for directly transmitting light from the second light guide member to the liquid crystal panel.

In accordance with another aspect of the inventive concept, a backlight unit having a dual-display function includes: at least one first light source configured to irradiate light; a first light guide member provided with a first through-hole corresponding to a partial region to guide the light irradiated from the first light source to a remaining region other than the partial region of the liquid crystal panel; an instrumental panel disposed at a rear of the first light guide member at a position corresponding to the first through-hole, and displayed on the partial region through the first through-hole; at least one second light source interposed between the first light guide member and the instrumental panel to irradiate light; a second light guide member having at last one pattern configured to diffuse the light irradiated from the second light source to guide the light to the instrumental panel and the liquid crystal panel; and a shutter installed adjacent to the second light guide member to determine display of the instrumental panel on the partial region.

The shutter may be interposed between the second light guide member and the instrument panel. The shutter may include a reflection surface for reflecting light, which is induced by the second light guide member, to the partial region.

The pattern may be formed at a region corresponding to the first through-hole, and may protrude from a surface facing the instrumental panel at a predetermined height towards the instrumental panel, or may be recessed on a surface facing the instrumental panel at a predetermined depth towards the instrumental panel.

The pattern may be provided in a dome shape at regular intervals on a surface of the second light guide member, and a cross section of the pattern may have at least one curved surface. Alternatively, the pattern may be provided in a polygonal shape at regular intervals on a surface of the second light guide member, and a cross section of the pattern may have at least one slope.

The pattern may be provided at a predetermined length along a surface of the second light guide member.

A light shield layer may be formed on an inner surface of the first through-hole to prevent the light irradiated from the first light source from being induced to the first through-hole of the first light guide member, and the light shield layer may be a reflection layer for reflecting light facing the partial region or the light shield layer may be a diffusion layer for dispersing and reflecting light.

An inner surface of the first though-hole may be provided with a diffused reflection layer for preventing the light emitted from the first light source and the second light source from being mixed with each other.

The instrumental panel may be provided as a rotatable reel, and a third light source may be provided at a rotational center of the reel to irradiate the light onto the instrumental panel.

A reflection plate may be provided between the first light guide member and the second light guide member, and may be provided with a second through-hole corresponding to the partial region to reflect the light, which is guided in a backward direction from the first light guide member, to the remaining region.

The backlight unit may include a housing for housing the liquid crystal panel, the first light guide member and the first light source, and the housing may be provided with a receiving hole corresponding to the first through-hole of the first light guide member.

The first through-hole may be provided with a transmission member for directly transmitting light from the second light guide member to the liquid crystal panel.

### BRIEF DESCRIPTION OF THE DRAWINGS

The foregoing and other features and advantages of the inventive concepts will be apparent from the more particular description of preferred embodiments of the inventive concepts, as illustrated in the accompanying drawings in which like reference characters refer to the same parts throughout the different views. The drawings are not necessarily to scale, emphasis instead being placed upon illustrating the principles of the inventive concepts. In the drawings:

FIG 1 is a cross-sectional view of a backlight unit having a dual-display function according to a related art;

FIG. 2 is a cross-sectional view of a backlight unit having a dual-display function according to an embodiment of the inventive concept;

FIG. 3 is a cross-sectional view of a light shield layer provided in a backlight unit having a dual-display function according to an embodiment of the inventive concept;

FIGS. 4 to 7 are cross-sectional views illustrating the shapes of patterns formed on a second light guide member of a backlight unit having a dual-display function according to an embodiment of the inventive concept;

FIG. 8 is a cross-sectional view of a communication lens of a backlight unit having a dual-display function according to an embodiment of the inventive concept; and

FIG. 9 is a cross-sectional view of a backlight unit having a dual-display function according to another embodiment of the inventive concept.

### DETAILED DESCRIPTION OF THE EMBODIMENTS

Various embodiments will now be described more fully with reference to the accompanying drawings in which some embodiments are shown. These inventive concepts may, however, be embodied in different forms and should not be construed as limited to the embodiments set forth herein. Rather, these embodiments are provided so that this disclosure is thorough and complete and fully conveys the inventive concept to those skilled in the art. In the drawings, the sizes and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

It will be understood that, although the terms first, second, third, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present inventive concept.

Spatially relative terms, such as "beneath," "below," "lower," "above," "upper" and the like, may be used herein for ease of description to describe one element's or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the present inventive concept. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments are described herein with reference to cross-sectional illustrations that are schematic illustrations of idealized embodiments (and intermediate structures). As such, variations from the shapes of the illustrations as a result, for example, of manufacturing techniques and/or tolerances, are to be expected. Thus, embodiments should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the present inventive concept.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, a backlight unit according to embodiments of the inventive concept will be described with reference to the appended drawings.

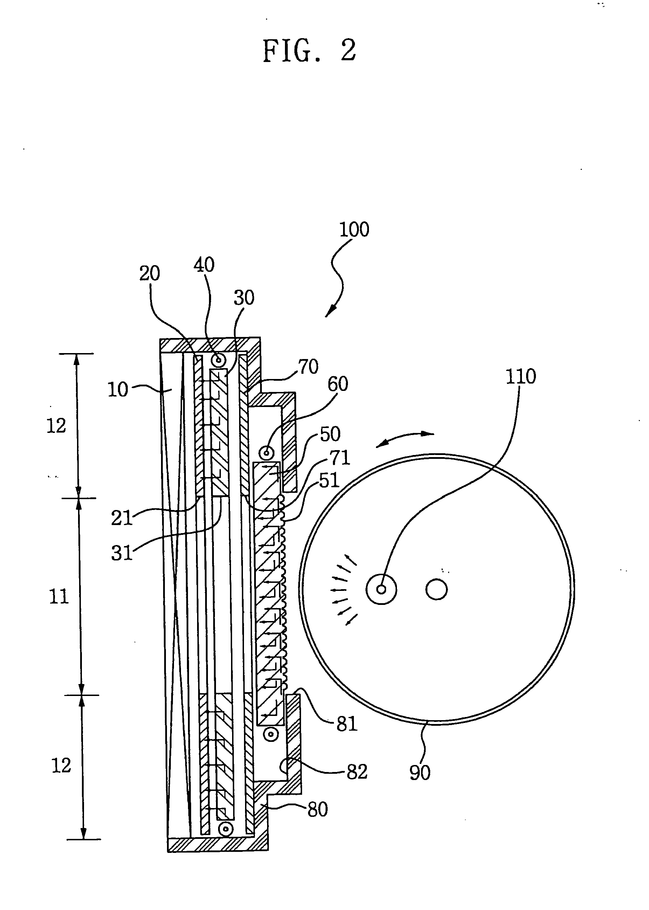

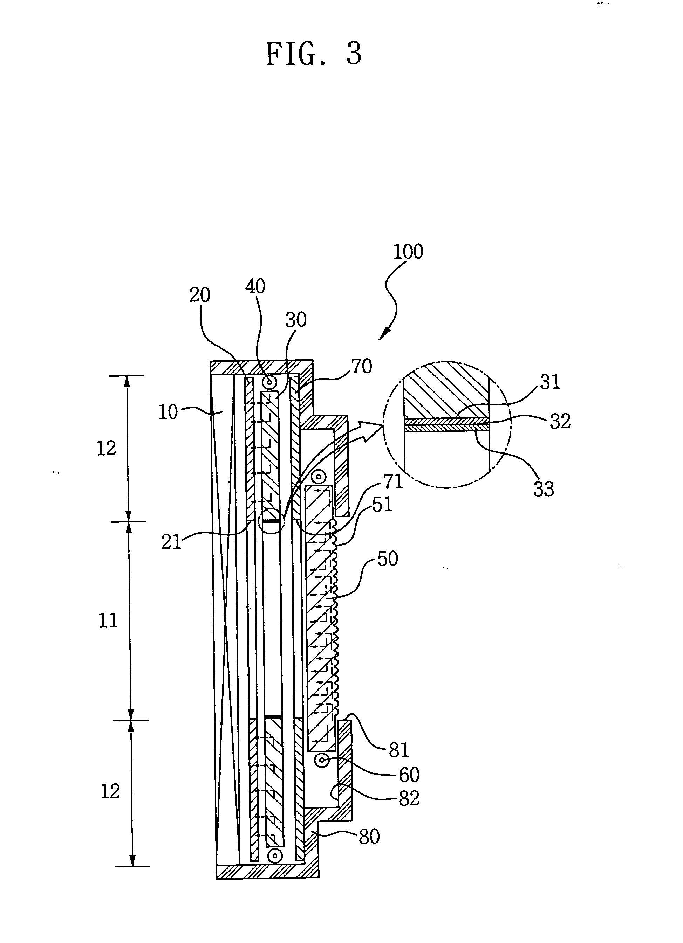

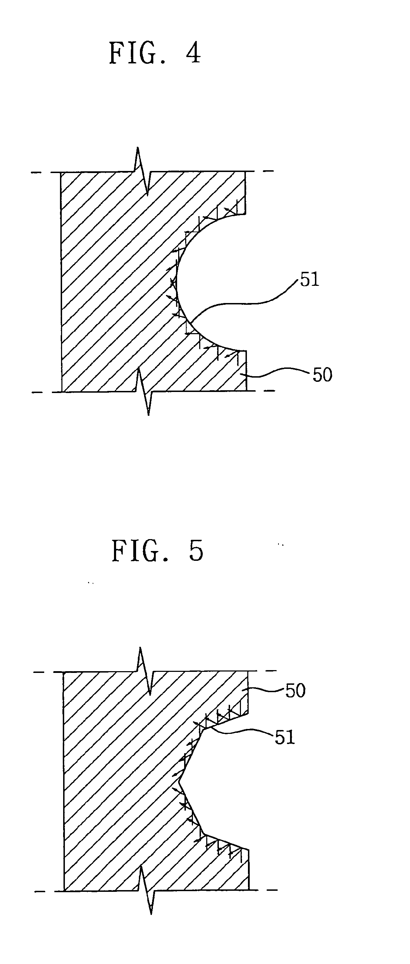

FIG. 2 is a cross-sectional view of a backlight unit having a dual-display function according to an embodiment of the inventive concept. FIG. 3 is a cross-sectional view of a light shield layer provided in a backlight unit having a dual-display function according to an embodiment of the inventive concept. FIGS. 4 to 7 are cross-sectional views illustrating the shapes of patterns formed on a second light guide member of a backlight unit having a dual-display function according to an embodiment of the inventive concept.

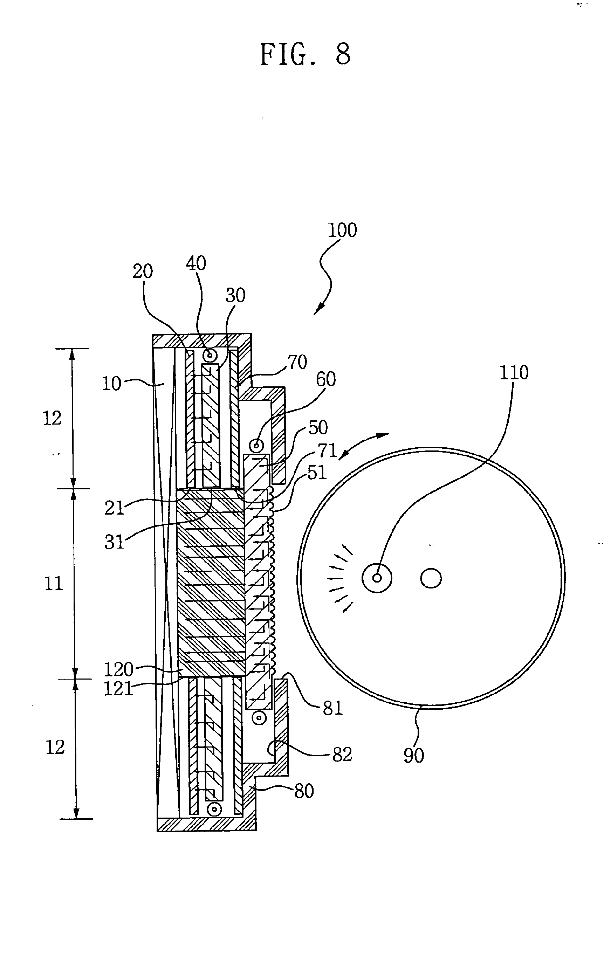

FIG. 8 is a cross-sectional view of a communication lens of a backlight unit having a dual-display function according to an embodiment of the inventive concept. FIG. 9 is a cross-sectional view of a backlight unit having a dual-display function according to another embodiment of the inventive concept.

As shown in FIGS. 2 to 6, a backlight unit 100 having a dual-display function according to embodiments of the inventive concept functions to provide light to a liquid crystal panel 10, and includes a first light source 40, a first light guide member 30 for guiding the light emitted from the first light source 40, an instrumental panel 90, a second light source 60 and a second light guide member 50. Also, the backlight unit 100 includes a housing 20 for housing the first light source 40, the first light guide member 30, the second light source 60 and the liquid crystal panel 10.

The liquid crystal panel 10 is a common LCD liquid crystal panel 10, and is configured to divide a partial region 11 and a remaining region 12 on the whole region of the liquid crystal panel 10 to display an image on the partial region and/or the remaining region. More specifically, different images can be realized on the partial region 11 and the remaining region 12, or the same image can be divided and realized on the partial region 11 and the remaining region 12.

Accordingly, the partial region 11 and the remaining region 12 may be provided with different liquid crystal panels 10 so that the partial region and the remaining region can realize different images. In this instance, the liquid crystal panel 10 corresponding to the partial region 11 is disposed at the center, while the liquid crystal panel 10 corresponding to the remaining region 12 is disposed at the edge of the partial region 11. In the remaining region 12, a plurality of liquid crystal panels 10 corresponding to the sizes of upper and lower portions, and left and right portions may be coupled about the liquid crystal panel 10 corresponding to the partial region 11.

The first light guide member 30 is formed in the shape of a plate, and is made of a synthetic resin such as PMMA or transparent acrylic resin. The first light guide member 30 is provided with a first through-hole 31 having a shape corresponding to the partial region 11 of the liquid crystal panel 10 at a position corresponding to the partial region 11 of the liquid crystal panel 10.

In this instance, the shape and size of the first through-hole 31 is determined by the shape and size of the partial region 11 of the liquid crystal region 10. If the partial region 11 of the liquid crystal panel 10 is formed in a rectangular shape, the first through-hole 31 is formed in a rectangular shape, and the sizes are identical to each other. However, the first through-hole 31 is not limited to the shape and size of the partial region 11.

The edge of the first light guide member 30 is provided with the first light source 40. Herein, at least one first light source 40 is provided, but at least one is installed at the upper and the lower portions, respectively. In addition, it may be installed at the right side and the left side, respectively, when seen from the front side.

In addition, the first light source 40 is provided as a light source such as a cold cathode fluorescent lamp (CCFL) or a light emitting diode (LED) so as to be installed at the edge of the first light guide member 30.

Accordingly, when the first light source 40 is driven to emit the light, the light emitted from the light source is incident on the edge of the first light guide member 30, and then is transmitted to the first through-hole 31, so that it is guided to the front liquid crystal panel 10.

The light facing the first through-hole 31 is reflected by the surface of the first through-hole 31, and then is guided to the remaining region 12 of the liquid crystal panel 10. In this instance, the light is reflected by the surface of the first through-hole 31, but a part of the light penetrates the first through-hole 31.

If necessary, as shown in FIG. 3, a light shield layer is provided at the inner surface of the first through-hole 31 so that the light does not penetrate. The light shield layer is formed on the inner surface of the first through-hole 31 using a deposition (including printing) or coating method, and a reflection layer may be provided so as to reflect the light incident on the edge. In addition, a diffusion layer may be provided to scatter and reflect the light entering from the edge. Furthermore, the inner surface of the first though-hole 1 may be provided with a diffused reflection layer for preventing the light emitted from the first light source 40 and the second light source 60 from being mixed with each other.

An optical sheet 20 for equalizing the light passing through the first light guide member 30 is interposed between the first light guide member 30 and the liquid crystal panel 10. The optical sheet 20 may include at least one diffusion sheet, a lens sheet, a prism sheet, and a composite sheet, or may include a laminated sheet of the diffusion sheet, the lens sheet and the prism sheet.

In this instance, the optical sheet 20 is provided with an optical hole 21 having a size which is identical to that of the first through-hole 31, at a position corresponding to the first through-hole 31. Accordingly, the optical sheet 20 is provided to diffuse the light guided by the first light guide member 30 corresponding to the remaining region of the liquid crystal panel 10.

A reflection plate 70 is provided at the rear side of the first light guide member 30 to forwardly reflect the light of the first light guide member 30 which is guided in the rearward direction. A second through-hole 71 corresponding to the first through-hole 31 of the first light guide member 30 is provided at the center of the reflection plate 70. The first through-hole 31 and the second through-hole 71 are formed in the same shape and size.

The housing 80 is a rectangular frame whose cross section is bent at a right angle, and houses the liquid crystal panel 10 of, the first light guide member 30, the first light source 40 and the reflection plate 70. The housing 80 is provided with a receiving hole 81 corresponding to the first through-hole 31 of the first light guide member 30, and the receiving hole 81 has the same shape and size as those of the first through-hole 31. In this instance, the surface of the receiving hole, which is perpendicular to the housing 80 to face the first light guide member 30, may be directly provided with a reflection portion (not illustrated) for reflecting the light facing the housing 80. If the reflection portion is formed by printing or coating, the reflection plate 70 may be eliminated.

The second light guide member 50 and the second light source 60 are provided at the rear side of the first light guide member 30. The second light source 60 is provided at the edge of the second light guide member 50 so that the light can be incident from the edge. In this instance, the first light source 40 is made of a CCFL so that it can be installed at the edge of the first light guide member 30. The second light guide member 50 is formed to have a size larger than the second through-hole 71 so as to cover the second through-hole 71 of the first light guide member 30.

The second light guide member 50 is provided with at least one pattern on one surface of the instrumental panel 90. In this instance, the pattern 51 is not limited to one surface of the instrumental panel 90, and may be formed on one surface of the liquid crystal panel 10.

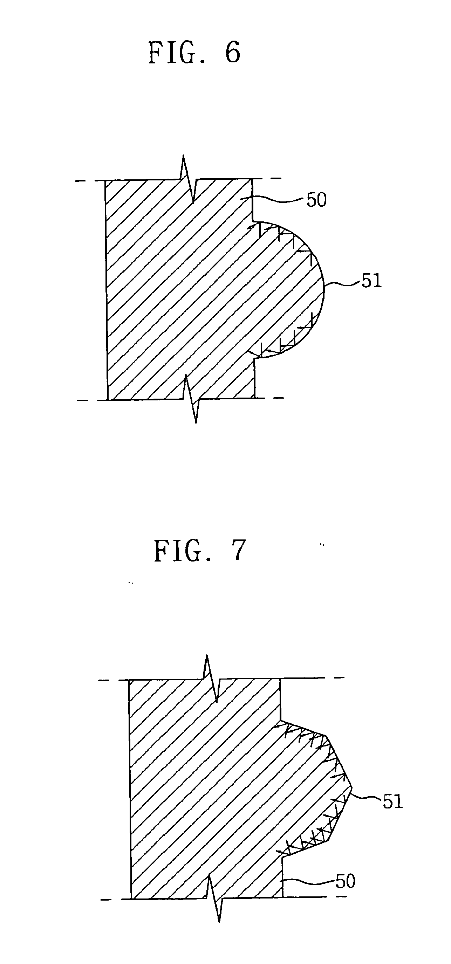

The pattern 51 may be formed in a concave groove, as shown in FIGS. 4 and 5, and may be formed in a protruding boss, as shown in FIGS. 6 and 7. In this instance, the groove or boss formed as the pattern 51 protrudes in a fine size, and is formed in the region having the range corresponding to the first through-hole 31 of the first light guide member 30, that is, the partial region 11 of the liquid crystal panel 10. Accordingly, the second light guide member 52 is formed to have a size larger than the area of the first through-hole 31.

The pattern 51 may be formed by pressing the plate of the second light guide member 50 having a constant thickness in a range not distorting the contents displayed on the instrumental panel 90, or may be integrally formed by injection molding. In addition, the pattern 51 may be formed by applying or printing powder of the same material as that of the light guide member 50.

As shown in FIG. 4 while the pattern 51 is formed in the concave shape, the cross-sectional shape may be formed in a dome shape. In this instance, the pattern 51 may be formed in an oval dome shape which is similar to the dome shape, of which at least one surface may be formed in a curved shape.

As shown in FIG. 5, while the pattern 51 is formed in the concave shape, the cross-sectional shape may be formed in a polygonal shape. In this instance, the pattern 51 may be provided in a triangular shape to have at least one slope. Accordingly, the pattern 51 may be formed in any one of a trapezoidal tetragonal shape, a pentagonal shape, a hexagonal shape, a heptagonal shape, and an octagonal shape, which has at least one slope surface, or may be formed in another shape.

As shown in FIG. 6, while the pattern 51 is formed in a protruding shape, the cross-sectional shape may be formed in a dome shape. In this instance, the pattern 51 may be formed in an oval dome shape which is similar to the dome shape, of which at least one surface may be formed in a curved shape.

As shown in FIG. 7, while the pattern 51 is formed in a protruding shape, the cross-sectional shape may be formed in a polygonal shape. In this instance, the pattern 51 may be provided in a triangular shape to have at least one slope. Accordingly, the pattern 51 may be formed in any one of a trapezoidal tetragonal shape, a pentagonal shape, a hexagonal shape, a heptagonal shape, and an octagonal shape, which has at least one slope surface, or may be formed in other shapes. The pattern 51 may be provided to have a constant length in the above-mentioned cross-sectional shape.

Accordingly, a part of the light is guided by the pattern 51 so that the light is diffused towards the liquid crystal panel 10, and another part of the remaining light is guided to the instrumental panel 90 to irradiate the instrumental panel 90. In the light reflected by the pattern towards the liquid crystal panel 10, the range of the light towards the liquid crystal panel 10 is restricted by the receiving hole 81 of the housing 80, and the light is irradiated onto the liquid crystal panel 10.

The housing 80 is provided with a seating portion 82 which is stepped to install the second light guide member 50 and the second light source 60, in addition to the liquid crystal panel 10, the optical sheet 20, the first light guide member 30, and the first light source 40 which are installed in the housing 80. The seating portion 82 is provided to accommodate the second light guide member 50 and the second light source 60.

Therefore, the second light guide member 50 provides a part of the light to the remaining region 12 of the liquid crystal panel 10, and most of the light is guided by the pattern 51 to be provide to the partial region 11, thereby reducing the difference in light and shade between the partial region 11 and the remaining region 12.

The instrumental panel 90 is provided in a reel type so that it can rotate, and is provided with words, symbols and figures to be expressed at predetermined angular intervals. The instrumental panel 90 includes a reel driving means (not illustrated) for rotating the instrumental panel 90 of a reel type. Herein, the instrumental panel 90 and the reel driving means (not illustrated) are known in the art, and the instrumental panel 90 is not limited to the reel type, but may be provided in a plate type.

In addition, a third light source 110 for irradiating the instrumental panel at the rear side through the first through-hole 31 may be provided at the rotational center of the instrumental panel 90. The third light source 110 irradiates the instrumental panel 90 at the rear side to increase the brightness at the front side. In this instance, since the third light source 110 should be formed narrower than the width of the instrumental panel 90, the third light source 110 is provided as a high-brightness LED. The instrumental panel 90 is made of a plate of synthetic resin having a relatively thin thickness of 1 mm or less so that the brightness is increased by the third light source 110.

Therefore, in a case in which images of advertisement or notices are realized through the whole region of the liquid crystal panel 10, power is simultaneously applied to the first light source 40 and the second light source 60 to increase the brightness of the remaining region 12 through the first light source 40 and the first light guide member 30 and to increase the brightness of the partial region 11 and the remaining region 12 through the second light source 60 and the second light guide member 40. In this instance, the third light source 110 is turned off.

In a case in which the instrumental panel 90 displayed through the partial region 11 of the liquid crystal panel 10 and the advertisement or notices displayed through the remaining region are divided and displayed, the power is simultaneously applied to the first light source 40 and the third light source 110 to increase the brightness of the remaining region 12 through the first light source 40 and the first light guide member 30, and the instrumental panel 90, of which the brightness is increased through the partial region 11, is displayed. In this instance, the second light source 60 is turned off.

As shown in FIG. 8, the backlight unit may include a transmission lens 120 for transmitting the light passing through the second light guide member 40 to the front side. The transmission lens 120 is made of a plate having a predetermined thickness, and may have the same shape and size as the first through-hole 31. In this instance, the thickness of the transmission lens 120 is greater than that of the first light guide member 30, and is smaller than that from the rear surface of the liquid crystal panel 10 to the second light guide member 50.

The rear side of the transmission lens 120 comes into close contact with the front side of the second light guide member 50, and the liquid crystal panel 10 comes into close contact with the front side thereof. Accordingly, the light guided by the second light guide member 50 is directly transmitted to the liquid crystal panel 10 through the transmission lens 120 to reduce leakage of the light.

The transmission lens 120 may be provided with a light shield portion 121 for preventing the light from leaking out away from the first through-hole 31 along the surface of the edge. The light shield portion 121 may be a light shield layer formed in the first through-hole 31, a reflection layer or a diffusion layer. In addition, the transmission lens 120 may be integrally formed to protrude the second light guide member 50 forwardly.

Meanwhile, a backlight unit 100 having a dual-display function according to another embodiment of the inventive concept is shown in FIG. 9, and includes a shutter 130 provided in the vicinity of the second light guide member 50.

As shown in FIG. 9, the shutter 130 is interposed between the second light guide member 50 and the instrumental panel 90. In a case in which the image is realized on the whole region of the liquid crystal panel 10, the shutter 130 interrupts the image so that the image is not displayed on the instrumental panel 90.

The shutter 130 includes a shutter driving means (not illustrated), and is opened and closed depending upon the image which is realized on the partial region 11 of the liquid crystal panel 10. If the image is realized, the shutter 130 is interrupted, while if the image is not realized on the partial region 11, the shutter 130 is opened to display the instrumental panel 90.

Therefore, in a case in which the image is realized on the whole region, the shutter 130 is interrupted to provide the light to the remaining region 12 through the first light source 40 and the first light guide member 30 and simultaneously provide the light to the partial region 11 through the second light source 60 and the second light guide member 50. In a case in which the instrumental panel 90 is displayed through the partial region 11, the shutter 130 is opened to supply the power to the third light source 110.

In this instance, in the case in which the image is realized on the partial region 11, the shutter 130 may be provided with a reflection surface 131 on a surface facing the second light guide member 50 so as to provide sufficient light to the partial region 11. Accordingly, if the image is realized on the whole region, the light is provided to the remaining region 12 through the first light source 40 and the first light guide member 30, and simultaneously, the light including the light reflected from the reflection surface 131 of the partial region 11 is provided through the second light source 60 and the second light guide member 50.

In the case in which the image is not realized on the partial region 11, the light is provided to the remaining region 12 through the first light source 40 and the first light guide member 30, and the sufficient light is provided to the partial region 11 through the second light source 60, the second light guide member 50 and the third light source 110. In this instance, the patterns or words of the instrumental panel 90 are displayed on the partial region 11.

As described above, a backlight unit having a dual-display function according to the inventive concept includes a first light guide member and a first light source, and a second light guide member and a second light source, so as to provide the light to a partial region and a remaining region of a liquid crystal panel respectively. When different contents are displayed on the partial region and the remaining region, the displayed contents can be accurately divided and displayed. In addition, when the same content is displayed, separation and overlap are reduced, thereby improving discrimination and reducing fatigue of eyes.

The foregoing is illustrative of embodiments and is not to be construed as limiting thereof. Although a few embodiments have been described, those skilled in the art will readily appreciate that many modifications are possible in embodiments without materially departing from the novel teachings and advantages. Accordingly, all such modifications are intended to be included within the scope of this inventive concept as defined in the claims. In the claims, means-plus-function clauses are intended to cover the structures described herein as performing the recited function, and not only structural equivalents but also equivalent structures. Therefore, it is to be understood that the foregoing is illustrative of various embodiments and is not to be construed as limited to the specific embodiments disclosed, and that modifications to the disclosed embodiments, as well as other embodiments, are intended to be included within the scope of the appended claims.

## Claims

1. A backlight unit having a dual-display function, comprising:
at least one first light source configured to irradiate light;
a first light guide member provided with a first through-hole corresponding to a partial region to guide the light irradiated from the first light source to the remaining region other than the partial region of the liquid crystal panel;
an instrumental panel disposed at a rear of the first light guide member at a position corresponding to the first through-hole, and displayed on the partial region through the first through-hole;
at least one second light source interposed between the first light guide member and the instrumental panel to irradiate light; and
a second light guide member having at least one pattern configured to diffuse the light irradiated from the second light source to guide the light to the instrumental panel and the liquid crystal panel.

2. The backlight unit of claim 1, further comprising a shutter installed adjacent to the second light guide member to determine display of the instrumental panel on the partial region.

3. The backlight unit of claim 1 or 2, wherein the pattern is formed at a region corresponding to the first through-hole, and protrudes from a surface facing the instrumental panel at a predetermined height towards the instrumental panel.

4. The backlight unit of claim 1 or 2, wherein the pattern is formed at a region corresponding to the first through-hole, and is recessed on a surface facing the instrumental panel at a predetermined depth towards the instrumental panel.

5. The backlight unit of claim 1 or 2, wherein the pattern is provided in a dome shape at regular intervals on a surface of the second light guide member, and a cross section of the pattern has at least one curved surface.

6. The backlight unit of claim 1 or 2, wherein the pattern is provided in a polygonal shape at regular intervals on a surface of the second light guide member, and a cross section of the pattern has at least one slope.

7. The backlight unit of claim 1 or 2, wherein the pattern is provided to have a predetermined length along a surface of the second light guide member.

8. The backlight unit of claim 1 or 2, wherein a light shield layer is formed on an inner surface of the first through-hole to prevent the light irradiated from the first light source from being induced to the first through-hole of the first light guide member.

9. The backlight unit of claim 7, wherein the light shield layer is a reflection layer for reflecting light facing the partial region.

10. The backlight unit of claim 7, wherein the light shield layer is a diffusion layer for dispersing and reflecting light.

11. The backlight unit of claim 1 or 2, wherein an inner surface of the first though-hole is provided with a diffused reflection layer for preventing the light emitted from the first light source and the second light source from being mixed with each other.

12. The backlight unit of claim 1 or 2, wherein the first light source is formed along an edge of the first light guide member such that at least two first light sources are disposed on both sides thereof in a symmetrical manner.

13. The backlight unit of claim 1 or 2, wherein the instrumental panel is provided as a rotatable reel, and a third light source is provided at a rotational center of the reel to irradiate the light onto the instrumental panel.

14. The backlight unit of claim 1 or 2, wherein a reflection plate is provided with a second through-hole corresponding to the partial region to reflect the light, which is guided in a backward direction from the first light guide member, to the remaining region between the first light guide member and the second light guide member.

15. The backlight unit of claim 1 or 2, wherein an optical sheet is provided to uniformly diffuse the light, which is induced by the first light guide member, to the liquid crystal panel between the first light guide member and the liquid crystal panel.

16. The backlight unit of claim 1 or 2, wherein the backlight unit comprises a housing for housing the liquid crystal panel, the first light guide member, the first light source, the second light guide member, and the second light source, and the housing is provided with a receiving hole corresponding to the first through-hole of the first light guide member.

17. The backlight unit of claim 1 or 2, wherein the first through-hole is provided with a transmission member for directly transmitting light from the second light guide member to the liquid crystal panel.

18. The backlight unit of claim 2, wherein the shutter is interposed between the second light guide member and the instrument panel.

19. The backlight unit of claim 2, wherein the shutter includes a reflection surface for reflecting light, which is induced by the second light guide member, to the partial region.

## Amended claims

### Amended claims in accordance with Rule 137(2) EPC.

**1.** A backlight unit (100) having a dual-display function, comprising:
at least one first light source (40) configured to irradiate light;
a first light guide member (30) provided with a first through-hole (37) corresponding to a partial region (11) to guide the light irradiated from the first light source (40) to a remaining region (12) of the liquid crystal planel (10) other than the partial region (11) of the liquid crystal panel (10); and
an instrumental panel (90) disposed at a rear of the first light guide member (30) at a position corresponding to the first through-hole (31) , and displayed on the partial region (11) through the first through-hole (31);
the said backlight unit (100) being **characterised in that** it comprises
at least one second light source (60) interposed between the first light guide member (30) and the instrumental panel (90) to irradiate light; and
a second light guide member (50) having at least one pattern (51) configured to diffuse the light irradiated from the second light source (66) to guide the light to the instrumental panel (90) and the liquid crystal panel (10).

**2.** A backlight unit according to claim 1, further comprising a shutter (130) installed adjacent to the second light guide member to determine display of the instrumental panel (90) on the partial region (11).

**3.** A backlight unit according to claim 1 or 2, wherein the pattern (51) is formed at a region corresponding to the first through-hole (31), and protrudes from a surface facing the instrumental panel (90) at a predetermined height towards the instrumental panel (90).

**4.** A backlight unit according to claim 1 or 2, wherein the pattern (51) is formed at a region corresponding to the first through-hole (31), and is recessed on a surface facing the instrumental panel (90) at a predetermined depth towards the instrumental panel (90).

**5.** A backlight unit according to claim 1 or 2, wherein the pattern (51) is provided in a dome shape at regular intervals on a surface of the second light guide member (50), and a cross section of the pattern (51) has at least one curved surface.

**6.** A backlight unit according to claim 1 or 2, wherein the pattern (51) is provided in a polygonal shape at regular intervals on a surface of the second light guide member (50), and a cross section of the pattern (51) has at least one slope.

**7.** A backlight unit according to claim 1 or 2, wherein the pattern (51) is provided to have a predetermined length along a surface of the second light guide member (50).

**8.** A backlight unit according to claim 1 or 2, wherein a light shield layer is formed on an inner surface of the first through-hole (31) to prevent the light irradiated from the first light source (40) from being induced to the first through-hole (31) of the first light guide member (30).

**9.** A backlight unit according to claim 7, wherein the light shield layer is a reflection layer for reflecting light facing the partial region.

**10.** A backlight unit according to claim 7, wherein the light shield layer is a diffusion layer for dispersing and reflecting light.

**11.** A backlight unit according to claim 1 or 2, wherein an inner surface of the first though-hole (31) is provided with a diffused reflection layer for preventing the light emitted from the first light source (40) and the second light source (60) from being mixed with each other.

**12.** A backlight unit according to claim 1 or 2, wherein the first light source (40) is formed along an edge of the first light guide member (30) such that at least two first light sources (40) are disposed on both sides thereof in a symmetrical manner.

**13.** A backlight unit according to claim 1 or 2, wherein the instrumental panel (90)is provided as a rotatable reel, and a third light source (110) is provided at a rotational center of the reel to irradiate the light onto the instrumental panel (90).

**14.** A backlight unit according to claim 1 or 2, wherein a reflection plate (70) is provided with a second through-hole (71) corresponding to the partial region (11) to reflect the light, which is guided in a backward direction from the first light guide member (30), to the remaining region between the first light guide member (30) and the second light guide member (30).

**15.** A backlight unit according to claim 1 or 2, wherein an optical sheet (20) is provided to uniformly diffuse the light, which is induced by the first light guide member (30), to the liquid crystal panel (10) between the first light guide member (30) and the liquid crystal panel (10).

**16.** A backlight unit according to claim 1 or 2, wherein the backlight unit comprises a housing (85) for housing the liquid crystal panel (10), the first light guide member (30), the first light source (40), the second light guide member (50), and the second light source (60), and the housing (80) is provided with a receiving hole (81) corresponding to the first through-hole (31) of the first light guide member (30).

**17.** A backlight unit according to claim 1 or 2, wherein the first through-hole (31) is provided with a transmission member (120) for directly transmitting light from the second light guide member (50) to the liquid crystal panel (18).

**18.** A backlight unit according to claim 2, wherein the shutter (130) is interposed between the second light guide member (50) and the instrument panel (18).

**19.** A backlight unit according to claim 2, wherein the shutter (130) includes a reflection surface (131) for reflecting light, which is induced by the second light guide member (50), to the partial region (11).
